Europäisches Patentamt

European Patent Office

Office européen des brevets

(19)

(11) Publication number: **0 105 655**
**A1**

(12) # EUROPEAN PATENT APPLICATION

(21) Application number: **83305475.2**

(22) Date of filing: **19.09.83**

(51) Int. Cl.³: **F 16 B 35/00**
**E 02 F 3/12**

(30) Priority: **30.09.82 GB 8227977**

(43) Date of publication of application:
**18.04.84 Bulletin 84/16**

(84) Designated Contracting States:
**AT BE CH DE FR IT LI LU NL SE**

(71) Applicant: **JACKSON FASTENERS LIMITED**
**Hawkshead P.O. Box 2**
**Glossop Derbeyshire SK13 9SD(GB)**

(72) Inventor: **Holding, John**
**29 Park Crescent**
**Glossop Derbyshire(GB)**

(74) Representative: **Quest, Barry et al,**
**M'CAW & CO. 41-51 Royal Exchange Cross Street**
**Manchester M2 7BD(GB)**

(54) Interconnection of elements with bolt fasteners.

(57) First and second elements, particularly a drive belt (1) and a bucket (2) of a bucket elevator, can be interconnected with a nut (4) and bolt fastener (3). The bolt has a head (8) at one end and a projecting end portion (11) at its opposite end, and the nut (4) is tightened with a tool which grips the bolt end portion (11) whilst the nut (4) is rotated. The bolt head (8) may be a relatively large flat disc-shaped structure.

FIG 1

EP 0 105 655 A1

(M14158A)             - 1 -
(8.9.83)

INTERCONNECTION OF ELEMENTS WITH BOLT FASTENERS

This invention relates to the interconnection of elements with bolt fasteners and is particularly, although not exclusively, concerned with the attachment of buckets to a drive belt of a bucket elevator.

It is known to secure buckets to a drive belt of a bucket elevator with bolts having relatively large disc-shaped heads with inwardly projecting fangs. Each bolt is passed through aligned holes in the belt and the pertaining bucket with the bolt head abutting the inner side of the belt, and a nut is tightened on the bolt against the bucket structure to draw the bucket and belt tightly together with the fangs on the bolt head biting into the belt body.

With present-day bucket elevators the trend is towards replacement of traditional cotton-reinforced rubber belts with nylon-reinforced plastics belts which, for a given strength, are lighter and give rise to lower frictional drag and can therefore be driven at appreciably higher speeds. However, at higher speeds it becomes necessary to

(M14158A)      - 2 -
(8.9.83)

fix the nuts extremely tightly on the fastener bolts to ensure that these do not readily loosen during normal operation of the elevator, and this gives rise to problems, especially if tight-fitting lock nuts, for example of the kind having nylon inserts, are to be used. In particular, it may be difficult to retain the bolt against rotation, at least in the initial stages of engagement of the nut therewith, because of the difficulty of attaining good purchase of the fanged bolt head on the belt body due to the problem of holding the bolt head whilst manipulating a tight-fitting lock nut especially having regard to the usually limited access at the back of the belt, and as a consequence of the relatively insubstantial nature of nylon-reinforced plastics belts.

An object of the present invention is to overcome or at least appreciably reduce these problems by providing a fastener with which tight and secure interconnection of elements can be effected readily and conveniently.

According to the invention therefore there is provided a method of interconnecting first and second elements with a fastener comprising a bolt having a threaded shank and a head with a radially extending surface thereto facing towards said shank, wherein said bolt is passed through holes in said elements and a nut is engaged with the bolt and tightened thereon thereby to securely grip the two elements between the nut and the head of the bolt with said surface of the bolt head against that side of the first element which is remote from said second element, characterised in that tightening of the nut is effected by rotation thereof whilst an end portion of the bolt remote from the bolt head is gripped with a gripping tool and retained against rotation therewith.

With this arrangement, it will be appreciated that tightening

(M14158A)
(8.9.83)

- 3 -

of the nut can be effected in a particularly simple and convenient manner without requiring access to the bolt head. Indeed, in so far as the tightening can be effected independently of the angular location of the bolt head it will be appreciated that it is not necessary to provide any special structures, such as fangs, on the bolt head for the purpose of achieving good purchase on the said first element. Instead, the bolt head need only be constructed with a view to ensuring positional security in the axial direction of the bolt and thus, for example, such bolt may simply have a relatively large radially extending smooth, planar face, wholly or substantially free of any projections such as fangs, for abutment with the first element. Preferably, said bolt head is disposed in direct contact with said side of the first element, i.e. without any plate or washer or the like interposed between the bolt head and the first element.

Most preferably, appropriately shaped cooperable configurations are provided respectively on the said end portion of the bolt and the gripping tool. Thus the bolt end portion may have a non-circular cross-section, particularly a polygonal, for example, hexagonal, cross-section in which case the tool has a correspondingly shaped, tubular gripping end adapted to fit securely around the bolt end portion.

Thus and in accordance with a second aspect of the present invention there is provided a fastener for use in performing the above-described method comprising a bolt having a threaded shank and a head with a radially extending surface thereto facing towards said shank, and a nut engageable with the bolt, characterised in that the said surface of the bolt head is arranged to extend beyond the radially outer periphery of the said nut and the bolt has an end portion remote from the head which is of non-circular

(M14158A)                          - 4 -
(8.9.83)
cross-section.

Preferably, the said surface of the bolt head extends from
the shank through a distance greater than the diameter of
the shank.

The bolt head may comprise a flat disc and may have a
circular periphery thereto.

The nut may contain a locking insert arranged to grip the
threaded shank strongly to the extent that tightening of
the nut on the shank would not normally be achievable
manually.

Any suitable tool may be used for rotating the nut although
in a preferred embodiment of the method of the invention
said gripping tool has a nut-tightening tool combined therewith, the latter tool comprising a tubular member shaped
at one end to fit around the nut and having an operating
arm projecting radially at its opposite end, and the gripping
tool extending coaxially through said tubular member and
having a holding portion at an end thereof opposite its
gripping end beyond the said opposite end of the said
tubular member.  The said operating arm may comprise a
ratchet arm and the said holding portion may comprise a
handle or lever whereby the tool is manually operable.
Alternatively the operating arm may comprise air-powered
gearing or other power drive, and the holding portion may
comprise a stop or the like, whereby the tool is power
operated.

It is visualised that the invention will find particular
application in the context of the attachment of buckets to
a drive belt of a bucket elevator although it is to be
understood that the invention is not intended to be restricted to this field of application and may be utilised in any suitable context for any suitable purpose.

The invention will now be described further by way of example only and with reference to the accompanying drawings in which:-

Fig. 1      is an axial section through a nut and bolt fastener for use in accordance with one embodiment of the invention;

Fig. 2      is an axial section through a tool for use with the nut and bolt fastener of Fig. 1;

Fig. 3      is a diagrammatic perspective view of part of a bucket elevator with which the fastener of Fig. 1 is used;

Fig. 4      is a view similar to Fig. 2 of an alternative tool;

Fig. 5      is a section on line V-V of Fig. 4; and

Fig. 6      is an end view from the left of Fig. 4.

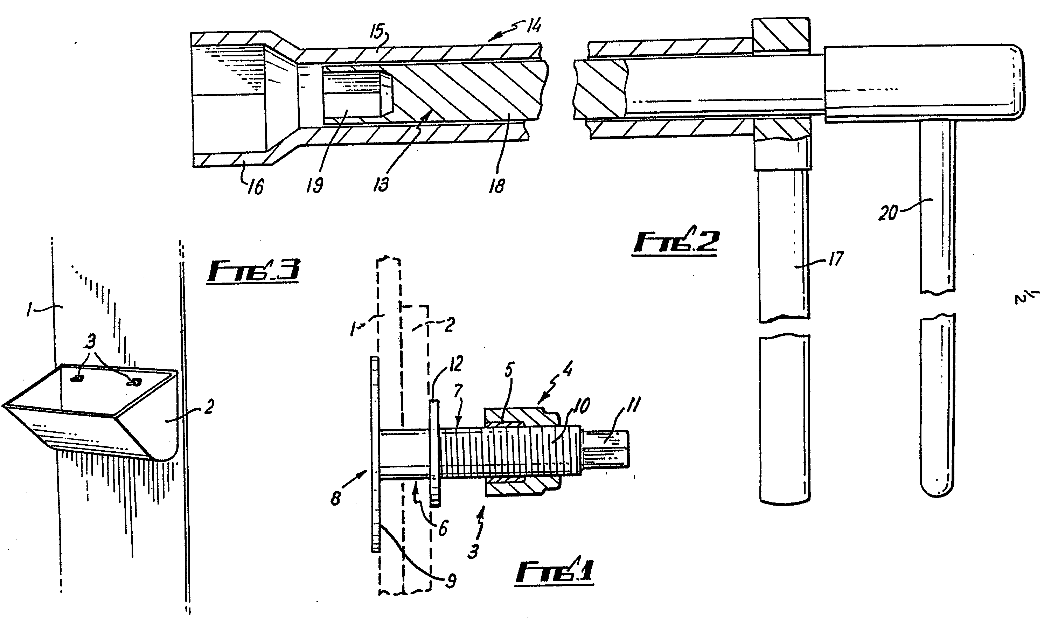

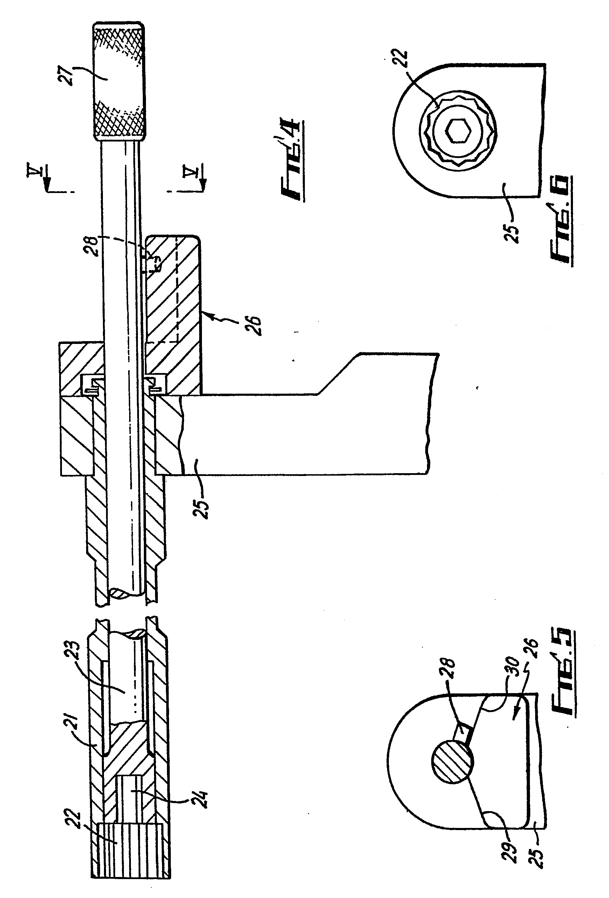

With reference to Fig. 3, this shows part of a bucket elevator of the kind comprising an endless drive belt 1 which has a series of buckets 2 fixed to its outer surface and which in use runs upwardly along a vertical elevator shaft to transfer loose material, for example, grain, from a lower location to an upper location.

The belt has a nylon carcass coated with plastics material and runs around drums [not shown] in conventional manner.

Each bucket 2 which comprises a metal structure of suitable size and shape is fixed to the belt 1 by bolt fasteners 3 passed through aligned holes in the belt in the bucket structure.

Attachment of the buckets 2 to the belt 1 is effected when the belt is in its operating position in the elevator shaft.

The holes in the belt 1 may be drilled before the belt is installed or subsequently when the belt is *in situ* as desired.

As shown in Fig. 1 each nut and bolt fastener 3 comprises a conventional hexagonal nut 4 fitted with a nylon insert 5 and a bolt 6 having a threaded shank 7 and a generally flat circular disc-shaped head 8 with a smooth, planar, projection-free inner face 9 extending perpendicularly to the axis of the shank 7. The threaded portion 10 of the shank 7 terminates at each end at positions spaced from the respective ends of the shank 7. The portion 11 of the shank 7 from the end remote from the bolt head 8 up to the adjacent end of the threaded portion 10 is, unlike the remaining part of the shank, not of circular cross-section but rather is of regular hexagonal form.

During attachment of a bucket to the belt, each pertaining bolt 6 is inserted, by hand, through aligned holes in the belt and bucket until the inner face 9 of the bolt head 8 rests against the inner surface of the belt 1 and the associated nut 4 is then engaged with the threaded portion 10 and tightened against the bucket structure via the interposition of a washer 12. The relatively large flat head 9 of the bolt 6 ensures wide contact with the belt surface and thereby acts to prevent the bolt head from tearing or pulling through the belt.

Rotation of the nut 4 on the threaded portion 10 is effected with the aid of a tool as shown in Fig. 2.

(M14158A)                    - 7 -
(8.9.83)

As can be seen from the drawing this tool comprises inner and outer coaxially arranged members 13, 14.

The outer member 14 comprises a rigid metal tube 15 having a hexagonal socket 16 at one end which is shaped to fit tightly yet releasably around the hexagonal nut. At the opposite end a reversible ratchet handle 17 is secured to the tube 15 so that the tube 15 can be rotated by turning the handle 17 in the appropriate direction.

The inner member 13 comprises a rigid metal rod 18 which fits closely within the tube 15 yet which is freely rotatable and axially slidable relative thereto. At one end, adjacent the socket 16 of the tubular member 15, the rod 18 has a hexagonal socket portion 19 which is shaped to fit tightly yet releasably around the end portion 11 of the bolt shank 7. At its other end the rod 18 extends beyond the end of the tubular member 15 and has thereon a radially extending handle 20.

In use the tool is manoeuvred into position so that the two hexagonal sockets 16, 19 engage respectively the nut 4 and the end portion 11 and the tubular member 15 is then rotated with the handle 17 whilst the rod 18 is held against rotation with the handle 20 thereby to rotate the nut 4 on the threaded portion 10.

In this way the nut 4 can be tightened easily and conveniently, despite the stiffness of the nylon insert 5, quite independently of the bolt head 8. That is, it is not necessary for the bolt head 8 to be held during the tightening operation nor even is it necessary to ensure that the bolt head is in contact with the belt during the initial stages of rotation of the nut 4 on the threaded portion 10. After tightening the tool is disengaged and the tightening

(M14158A)                    - 8 -
(8.9.83)

procedure is repeated with another nut and bolt.

Subsequently, for example, during repair and maintenance operations, the tool can be used with the ratchet drive appropriately reversed to assist in the removal of nut and bolt fasteners.

Instead of the hand tool of Fig. 2 it is possible to use a power-operated tool as shown in Fig. 4.

This tool has an outer rigid tubular member 21 with a multi-faced socket 22 at its bottom end which can fit tightly round the nut 4, and an inner rigid metal rod 23 having a hexagonal socket 24 at its bottom end to fit tightly round the bolt end portion 11.

At its top end the member 21 is connected to a radially extending arm 25 and an abutment structure 26. Within the arm 25 the top end of the member 21 is drivably connected to a gear chain [not shown] which is arranged to be operatively connected to a source of compressed air in a manner conventional in the power-operated tool art.

The top end portion of the rod 23 extends freely rotatably through the member 21, the arm 25 and the abutment structure 26 and terminates in a knurled knob 27. Below the knob 27, the rod 23 has a radially projecting pin 28 which is capable of engaging two abutment surfaces 29, 30 of the structure 26 respectively in two different angular positions of the rod 23.

In use, the sockets 22, 24 are engaged respectively with the nut 4 and the bolt end portion 11 [using the knob 27 for manual adjustment purposes], and the member 21 is then rotated relative to the arm 25 and the structure 26 via

(M14158A)
(8.9.83)

- 9 -

the gear connection in the arm 25 by air power. The rod 23 will rotate at the same time until the pin 28 strikes one of the surfaces 29, 30 whereupon further rotation is prevented, it being understood that the arm 25 and structure 26 are restrained against rotation manually or by appropriate mounting thereof.

It is of course to be understood that the invention is not intended to be restricted to the details of the above embodiment which are described by way of example only. Thus, for example, it may be possible to use an arrangement in which the bolt end portion is slotted to receive an appropriately shaped tongue of the gripping tool.

0105655

(M14158A)                    10 -
(15.9.83)
Claims:

1.   A method of interconnecting first and second elements
(1, 2) with a fastener (3) comprising a bolt (6) having a
threaded shank (7) and a head (8) with a radially extending
surface (9) thereto facing towards said shank, wherein
said bolt is passed through holes in said elements and a
nut (4) is engaged with the bolt and tightened thereon
thereby to securely grip the two elements between the nut
and the head of the bolt with said surface of the bolt
head against that side of the first element which is remote
from said second element,
characterised in that
tightening of the nut (4) is effected by rotation thereof
whilst an end portion (11) of the bolt remote from the
bolt head (8) is gripped with a gripping tool (13, 19, 20)
and retained against rotation therewith.

2.   A method according to claim 1,
characterised in that
said bolt head (8) is disposed in direct contact with said
side of the first element (1).

3.   A method according to claim 1 or 2,
characterised in that
said end portion (11) of the bolt is of non-circular cross-
section and the said tool has a correspondingly shaped
tubular gripping end (19) adapted to fit securely around
the bolt end portion.

4.   A method according to claim 3,
characterised in that
said gripping tool (13, 19, 20) has a nut-tightening tool
(14-18) combined therewith, the latter tool comprising a
tubular member (14) shaped at one end (16) to fit around
the nut (4) and having an operating arm (17) projecting radially at its opposite end, and the gripping tool (13) extending coaxially through said tubular member (14) and having a holding portion (20) at an end thereof opposite its gripping end (19) beyond the said opposite end of the said tubular member (14).

5.    A method according to any one of claims 1 to 4, characterised in that said first and second elements comprise respectively an endless drive belt (1) and a bucket (2) of a bucket elevator.

6.    A fastener for use in performing the method of any one of claims 1 to 5, comprising a bolt (6) having a threaded shank (7) and a head (8) with a radially extending surface (9) thereto facing towards said shank, and a nut (4) engageable with the bolt,
characterised in that
the said surface (9) of the bolt head (8) is arranged to extend beyond the radially outer periphery of the said nut (4) and the bolt (6) has an end portion (11) remote from the head (8) which is of non-circular cross-section.

7.    A fastener according to claim 6,
characterised in that
said surface (9) of the bolt head (8) extends from the shank (7) through a distance greater than the diameter of the shank.

8.    A fastener according to claim 6 or 7,
characterised in that
said bolt head (8) comprises a flat disc having a circular periphery thereto.

9.    A fastener according to any one of claims 6 to 8,
characterised in that

(M14158A)
(15.9.83)
                          - 12 -

said nut (4) contains a locking insert (5).


10.   A fastener according to any one of claims 6 to 9, characterised in that said cross-section of said bolt end portion (11) is of polygonal shape.

FIG.3

FIG.2

FIG.1

FIG.4

FIG.5

FIG.6

| | European Patent Office | EUROPEAN SEARCH REPORT | Application number |

| Category | Citation of document with indication. where appropriate, of relevant passages | Relevant to claim | CLASSIFICATION OF THE APPLICATION (Int. Cl. ³) |
|---|---|---|---|
| | | | EP 83305475.2 |
| A | CH - A5 - 610 990 (SEMPERIT AKTIENGESELLSCHAFT) <br> * Abstract; fig. 1,2; page 3, lines 63-65 * | 1,3,6, 10 | F 16 B 35/00 <br> E 02 F 3/12 |
| X | US - A - 1 361 858 (L.A. HOEFLICH) <br> * Fig. 1-5 * | 6,8 | |

DOCUMENTS CONSIDERED TO BE RELEVANT

TECHNICAL FIELDS SEARCHED (Int. Cl. ³)

F 16 B
E 02 F

The present search report has been drawn up for all claims

| Place of search | Date of completion of the search | Examiner |
|---|---|---|
| VIENNA | 19-12-1983 | REIF |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82